# EUROPÄISCHE PATENTSCHRIFT

(11) **EP 3 098 672 B1**
(45) Veröffentlichungstag und Bekanntmachung des Hinweises auf die Patenterteilung: **11.07.2018**
(21) Anmeldenummer: 15169423.9
(22) Anmeldetag: 27.05.2015
(51) Int. Cl.: G05B 11/01, G06F 8/70, G05B 19/042

(54) **KONFIGURATIONSVORRICHTUNG UND VERFAHREN ZUM KONFIGURIEREN EINES AUTOMATISIERUNGSSYSTEMS**
CONFIGURATION DEVICE AND METHOD FOR CONFIGURING AN AUTOMATION SYSTEM
DISPOSITIF DE CONFIGURATION ET PROCEDE DE CONFIGURATION D'UN SYSTEME D'AUTOMATISATION

(43) Veröffentlichungstag der Anmeldung: 30.11.2016
(73) Patentinhaber: SICK AG, 79183 Waldkirch (DE)
(72) Erfinder: Moddemann, Jörg, 79350 Sexau (DE); Weddingfeld, Klaus, 79183 Waldkirch (DE)

(56) Entgegenhaltungen:
- WO-A1-2006/032344
- WO-A1-2010/051104

## Beschreibung

Die Erfindung betrifft eine Konfigurationsvorrichtung, gemäß dem Oberbegriff des Anspruchs 1, und ein Verfahren, gemäß dem Oberbegriff des Anspruchs 6, zum Konfigurieren eines Automatisierungssystems eines Kunden, das Gerätekomponenten eines oder mehrerer Herstellers/Hersteller umfasst.

Herkömmlich kann in der Automatisierungsindustrie ein Kunde über ein computerbasiertes Softwaretool eine Gerätekomponente eines Herstellers derart konfigurieren, so dass die Gerätekomponente ein entsprechendes Verhalten für einen Betrieb mit einer Arbeitsmaschine des Kunden aufweist.

Hierzu muss der Kunde sein Wissen häufig aus seiner speziellen Sichtweise für die Anwendung seiner Arbeitsmaschine auf die allgemeine Funktion der Gerätekomponente transferieren. Dies schließt häufig auch die Überlegung bzgl. der verwendeten Begriffe bzw. Terminologie der physikalischen Einheiten oder den Umrechnungsregeln ein.

Um die Konfiguration der Gerätekomponente bzw. die Übertragung von Anwenderdaten der Arbeitsmaschine auf die Gerätekomponente für den Kunden zu erleichtern, bieten einige Softwaretools Funktionen, sogenannte Assistenten an, die den Kunden anhand per schrittweiser Abfrage der Anwenderdaten durch die Einstellmöglichkeiten der Gerätekomponente leiten, so dass die Konfiguration des Automatisierungssystems für den Kunden erleichtert wird.

Hierbei ergibt sich jedoch ein weiterer Nachteil für den Kunden, der z. B. ein Automatisierungssystem mit mehreren Gerätekomponenten konfigurieren möchte, da er die gesamten Abfragen immer wieder durchgehen muss, um seine Anwenderdaten für alle Gerätekomponente mittels des Herstellers Softwaretools einzugeben. Bei einer Änderung der Anwenderdaten, wie z. B. eine Modifikation der Arbeitsmaschine, muss der Kunde sämtliche Daten bei den Gerätekomponenten aktualisieren, d. h. in sämtlichen Assistenten erneut eingeben.

Im Falle, dass das Automatisierungssystem mehrere Gerätekomponenten verschiedener Hersteller umfasst, besteht das zusätzliche Problem des Kunden, mit verschiedenen Softwaretools für die verschiedenen Gerätekomponenten zu arbeiten, bzw. sich mit den verschiedenen Softwaretools auszukennen.

Ferner sind Automatisierungssysteme bekannt, bei denen die Arbeitsmaschine und die Gerätekomponente über ein Bussystem mit einer übergeordneten programmierbaren Sicherheitssteuerung, einer sogenannten SPS, verbunden sind. Hierbei können sämtliche Konfigurationsdaten des Automatisierungssystems in der SPS gespeichert sein, so dass die SPS die Konfigurationsdaten der Arbeitsmaschine und der Gerätekomponenten über das Bussystem an die Arbeitsmaschine und an die Gerätekomponenten kommuniziert, wobei die Konfigurationsdaten entsprechend Anwenderdaten von der SPS bestimmt werden.

Auch in diesem Fall ergibt sich der Nachteil für den Kunden, dass eine entsprechende Kenntnis bzgl. der Bedienung bzw. der Programmierung der SPS vorausgesetzt wird. Ferner, auch wenn die Speicherung der Konfigurationsdaten in der SPS erfolgt, muss der Kunde sämtliche Anwenderdaten bei den Gerätekomponenten aktualisieren, um die Konfigurationsdaten zur Ablage in der SPS entsprechend zu aktualisieren.

WO 2010/051104 A1 offenbart eine Konfigurationsvorrichtung mit den Merkmalen des Oberbegriffs des Anspruchs 1 und ein Verfahren mit den Merkmalen des Oberbegriffs des Anspruchs 7. Insbesondere ist die Konfigurationsvorrichtung ein Interface, über das ein Bediener Schweiß-Kenndaten einer beabsichtigten Schweißarbeit in einem Menü auswählen kann. Die Schweiß-Kenndaten werden automatisch durch das Interface in Strom-Kenndaten für eine Energiequelle des Schweißgeräts umgewandelt, so dass die nötige Energie für die beabsichtigte Schweißarbeit von der Energiequelle geliefert werden kann.

Hierbei ergibt sich ebenfalls der Nachteil, dass der Bediener Fachwissen bzgl. Schweißens haben muss, um die Konfiguration an dem Interface durchführen zu können.

Es ist daher eine Aufgabe der Erfindung, eine Konfigurationsvorrichtung und ein Verfahren zum Konfigurieren eines Automatisierungssystems derart zu verbessern, dass die Konfiguration des Automatisierungssystems ohne notwendiges Vorwissen für den Bediener bzw. den Kunden vereinfacht wird.

Die Aufgabe wird erfindungsgemäß durch eine Konfigurationsvorrichtung zum Konfigurieren eines Automatisierungssystems eines Kunden mit den Merkmalen des Anspruchs 1 gelöst.

Gemäß einem bevorzugten Ausführungsbeispiel umfasst das erste und zweite Softwaretool jeweils zumindest eine Eingabemaske, wobei die Eingabemaske des ersten Softwaretools für die Terminologie des Kunden und die Eingabemaske des zweiten Softwaretools für die Terminologie des Herstellers ausgebildet sind. Hierdurch ist es vorteilhaft für den Kunden, die Anwenderdaten in seiner spezifischen Terminologie einzugeben, ohne sich in die Terminologie des Herstellers einzuarbeiten bzw. auszukennen. Vorteilhafterweise sind die Eingabemasken ausgebildet, verschiedene Anwendungen, z. B. Maschinentypen und/oder Applikationen, des Kunden abzubilden.

Gemäß einem weiteren bevorzugten Ausführungsbeispiel umfassen die Anwenderdaten Automatisierungssystem-Betriebsdaten, vorzugsweise Beladungsdaten, Bewegungsgeschwindigkeit, Bewegungsprofil oder dergleichen des Automatisierungssystems.

Gemäß einem bevorzugten Ausführungsbeispiel umfassen die Konfigurationsdaten Komponenten-Betriebsdaten, vorzugsweise Beschleunigungsrampen, Bremsrampen, Scanbereich, Reaktionszeiten oder dergleichen der Gerätekomponenten.

Gemäß einem weiteren bevorzugten Ausführungsbeispiel sind die kundenspezifischen terminologischen Anwenderdaten aus dem Datenverwaltungsbereich des ersten Softwaretools mittels Drag & Drop der Abbildungsvorschrift des zweiten Softwaretools zuordenbar.

Die Aufgabe wird weiterhin erfindungsgemäß durch ein Verfahren zum Konfigurieren eines Automatisierungssystems eines Kunden, das Gerätekomponenten eines oder mehrerer Herstellers/Hersteller umfasst, mit den Merkmalen des Anspruchs 6 gelöst.

Gemäß einem bevorzugten Ausführungsbeispiel werden die Anwenderdaten in kundenspezifischen Terminologien mittels des ersten Softwaretools eingegeben.

Weiterhin werden gemäß einem bevorzugten Ausführungsbeispiel das Umwandeln der kundenspezifischen terminologischen Anwenderdaten in herstellerspezifischen Terminologien und das Erstellen der herstellerspezifischen terminologischen Konfigurationsdaten in dem zweiten Softwaretool durchgeführt.

Gemäß einem weiteren bevorzugten Ausführungsbeispiel werden die kundenspezifischen terminologischen Anwenderdaten durch Drag & Drop vom ersten Softwaretool mit dem zweiten Softwaretool verknüpft.

Die erfindungsgemäße Konfigurationsvorrichtung und das erfindungsgemäße Verfahren können auf ähnliche Weise durch weitere Merkmale ausgestaltet werden und zeigen dabei ähnliche Vorteile. Derartige weitere Merkmale sind beispielhaft, aber nicht abschließend, in den sich an den unabhängigen Ansprüchen anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines erfindungsgemäßen Ausführungsbeispiels und
- Fig. 2 und 3: eine schematische Detail-Darstellung des erfindungsgemäßen Ausführungsbeispiels.

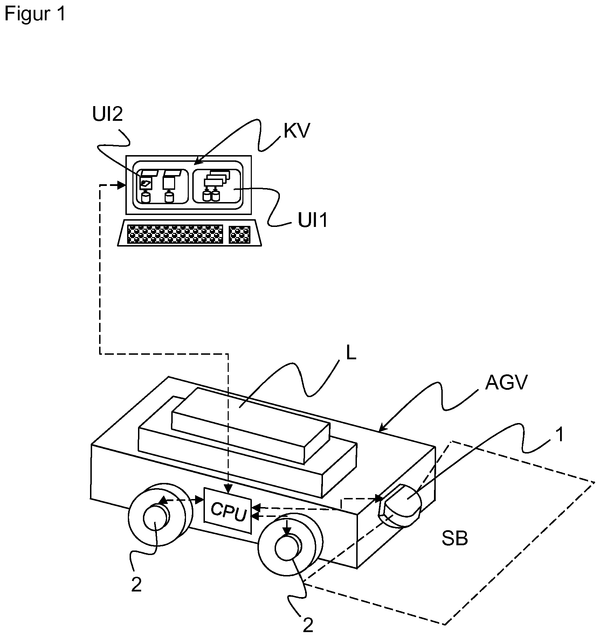

Anhand der Figur 1 wird ein bevorzugtes Ausführungsbeispiel der Erfindung schematisch beschrieben, bei dem ein Kunde eine Arbeitsmaschine in Form eines fahrerlosen Transportfahrzeugs, ein sogenanntes "Automatic Guided Vehicle" AGV, konfigurieren möchte.

Das fahrerlose Transportfahrzeug AGV ist in dem dargestellten bevorzugten Ausführungsbeispiel zum Transportieren von Lasten L vorgesehen, wobei die Lasten L unterschiedliche Maße und Gewichte aufweisen können. Entsprechend der zu transportierenden Lasten L wird das Fahrverhalten des fahrerlosen Transportfahrzeugs AGV angepasst. Hierbei weist das fahrerlose Transportfahrzeug AGV eine Rechnereinheit CPU auf, die das fahrerlose Transportfahrzeug AGV überwacht und steuert. Daten zum Überwachen und zum Steuern des fahrerlosen Transportfahrzeugs AGV liefern Signale von Gerätekomponenten 1, 2 eines Herstellers oder mehrerer Hersteller, die an dem fahrerlosen Transportfahrzeug AGV angeordnet sind.

Somit bilden das fahrerlose Transportfahrzeug AGV, die Rechnereinheit CPU und die Gerätekomponenten 1, 2 das Automatisierungssystem des Kunden, das der Kunde mit einer erfindungsgemäßen Konfigurationsvorrichtung KV konfiguriert. Hierbei sind das erwähnte angepasste Fahrverhalten und die erwähnte zu transportierenden Lasten L dem Kunden als nachfolgend näherbeschriebenen Anwenderdaten AD1, AD2, AD3 bekannt.

Die erfindungsgemäße Konfigurationsvorrichtung KV weist ein erstes Softwaretool S1.1, S1.2, S1.3 und ein zweites Softwaretool S2.1, S2.2 auf.

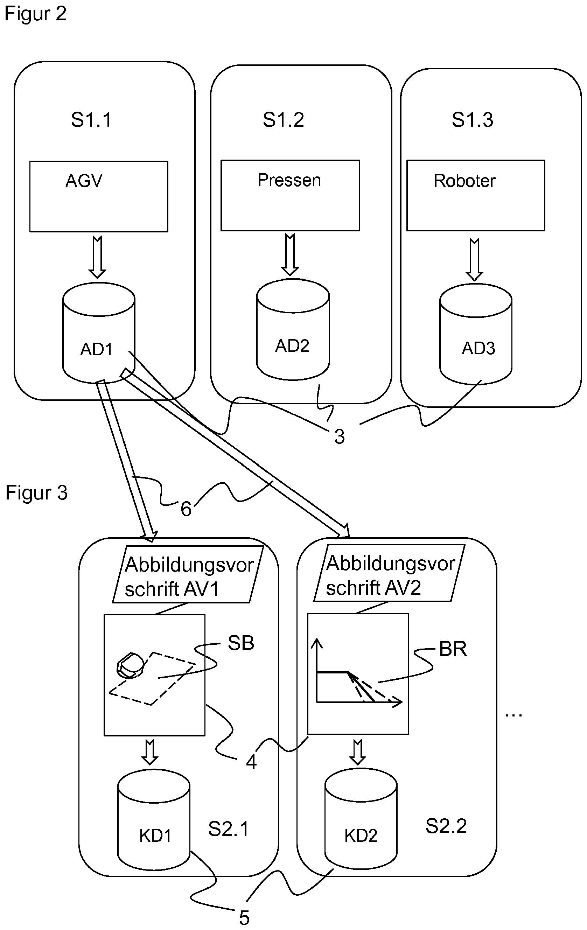

In den Figuren 2 und 3 ist die erfindungsgemäße Konfigurationsvorrichtung KV in Detail dargestellt.

Figur 2 zeigt drei erste Softwaretool S1.1, S1.2, S1.3 der erfindungsgemäßen Konfigurationsvorrichtung KV. Die drei ersten Softwaretool S1.1, S1.2, S1.3 umfassen jeweils ein Userinterface, das verschiedene Anwendungen des Kunden in seiner kundenspezifischen Terminologien abbilden. In dem gezeigten Beispiel bildet das erste Userinterface die Anwendung des fahrerlosen Transportfahrzeugs AGV ab. Das zweite Userinterface bildet die Anwendung einer Pressen ab, und das dritte Userinterface bildet die Anwendung eines Roboters ab.

Mit den drei ersten Softwaretool S1.1, S1.2, S1.3 kann der Kunde seine Anwenderdaten AD1 - AD3 in kundenspezifischen Terminologien eingeben, wobei die eingegebenen Anwenderdaten AD1 - AD3 in einem Datenverwaltungsbereich 3 abgespeichert werden. Der Datenverwaltungsbereich 3 kann auch aus einem nichtflüchtigen Datenspeicher bestehen.

Unter kundenspezifischer Terminologie wird ein erstes Datenformat verstanden, in dem der Kunde seine Anwenderdaten beschreibt. D. h. der Kunde gibt seine zu transportierende Lasten L beispielsweise unter der Bezeichnung "Kistenanzahl" mit der Gewichtseinheit "Kilogramm pro Kiste" oder das gewünschte Bewegungsprofil seines fahrerlosen Transportfahrzeugs AGV unter Bezeichnung "Profil i" und mit der Geschwindigkeitseinheit "m/s" in das Userinterface des ersten Softwaretools S1.1 der erfindungsgemäßen Konfigurationsvorrichtung KV ein.

Aus Sicht des Kunden umfassen die Anwenderdaten daher Betriebsdaten seines Automatisierungssystems, nachfolgend auch als Automatisierungssystem-Betriebsdaten bezeichnet, die beispielsweise Beladungsdaten, Bewegungsgeschwindigkeit, Bewegungsprofil oder dergleichen des fahrerlosen Transportfahrzeugs AGV sein können.

Der Kunde hat somit den Vorteil, dass er seine Anwenderdaten AD1 - AD3 in seiner gewohnten Terminologie und in dem gewohnten Datenformat in die erfindungsgemäße Konfigurationsvorrichtung KV eingeben kann.

Ferner weist die erfindungsgemäße Konfigurationsvorrichtung KV, wie in der Figur 3 in Detail dargestellt, zweite Softwaretool S2.1, S2.2 auf, die zum Aufnehmen der abgespeicherten Anwenderdaten AD1 vorgesehen sind und jeweils mit einer Berechnungseinheit 4 zum Ermitteln von Konfigurationsdaten KD1, KD2 aus den Anwenderdaten AD1 versehen sind. Die zweiten Softwaretool S2.1, S2.2 umfassen ebenfalls vorteilhafterweise jeweils ein Userinterface, das für die Terminologie des Herstellers bzw. der Hersteller der Gerätekomponenten 1, 2 ausgebildet ist.

Die herstellerspezifische Terminologie umfasst hierbei ein zweites Datenformat, in dem der Hersteller bzw. die Hersteller die Konfigurationsdaten KD1, KD2 beschreibt/beschreiben. Die Konfigurationsdaten KD1, KD2 umfassen Betriebsdaten der Gerätekomponenten 1, 2, nachfolgend auch als Komponenten-Betriebsdaten bezeichnet, wobei die Komponenten-Betriebsdaten vorzugsweise Beschleunigungsrampen, Bremsrampen BR, Scanbereich SB, Reaktionszeiten oder dergleichen der Gerätekomponenten 1, 2 umfassen.

Die zweiten Softwaretools S2.1, S2.2 weisen jeweils zumindest eine Abbildungsvorschrift AV1, AV2 auf, die die in kundenspezifischer Terminologie gespeicherte Anwenderdaten AD1 für die Berechnungseinheit 4 der zweiten Softwaretools S2.1, S2.2 in herstellerspezifischer Terminologie vorbereitet. Die Verknüpfung der Anwenderdaten AD1 zu den jeweiligen Abbildungsvorschriften AV1, AV2 ist durch die Pfeile 6 dargestellt. D. h. die jeweilige Abbildungsvorschrift AV1, AV2 passt das erste Datenformat der Anwenderdaten AD1 an das zweite Datenformat für die Berechnungseinheit 4 des zweiten Softwaretools S2.2, S2.2 an, so dass die abgespeicherten Anwenderdaten AD1 von der Berechnungseinheit 4 verwendet werden können. Erfindungsgemäss weist das jeweilige zweite Softwaretool S2.1, S2.2 hierfür einen Übersetzungsalgorithmus auf, der die kundenspezifischen terminologischen Anwenderdaten AD1 - AD3 in herstellerspezifische terminologische Daten umwandelt und der Berechnungseinheit 4 zur Verfügung stellt. Hieraus erzeugt die Berechnungseinheit 4 des jeweiligen zweiten Softwaretools S2.1, S2.2 die Konfigurationsdaten KD1, KD2 für die Gerätekomponenten 1, 2 des fahrerlosen Transportfahrzeugs AGV.

Die von der Berechnungseinheit 4 erzeugten Konfigurationsdaten KD1, KD2 werden in einem weiteren Datenverwaltungsbereich 5 abgespeichert und dem Kunden zur Verfügung gestellt.

Erfindungsgemäß sind die Datenverwaltungsbereiche 3, 5 des ersten und zweiten Softwaretools S1, S2 voneinander getrennt, so dass vorzugsweise die kundenspezifischen terminologischen Anwenderdaten AD1 - AD3 aus dem Datenverwaltungsbereich 3 mittels Drag and Drop mit der Abbildungsvorschrift AV1, AV2 des zweiten Softwaretools S2 verknüpft werden.

Gemäß der beschriebenen Konfiguration des fahrerlosen Transportfahrzeugs AGV gibt der Kunde seine Anwenderdaten AD1 in kundenspezifischer Terminologie mittels des ersten Softwaretools S1 in dem Datenverwaltungsbereich 3 ein. Die Anwenderdaten AD1 betreffend Anzahl der transportierten Kisten und die Beladung des fahrerlosen Transportfahrzeugs AGV in Kilogramm sind in dieser kundenspezifischen Terminologie in dem Datenverwaltungsbereich 3 abgespeichert.

Die in kundenspezifischer Terminologie gespeicherten Anwenderdaten AD1 werden vorzugsweise mittels Drag & Drop mit der Abbildungsvorschrift AV1, AV2 des zweiten Softwaretools S2.1, S2.2 verknüpft, wo die kundenspezifischen terminologischen Anwenderdaten AD1 in herstellerspezifische terminologische Daten umgewandelt werden. Aus den derart in herstellerspezifischer Terminologie umgewandelten Daten werden mittels der Berechnungseinheit 4 des zweiten Softwaretools S2.1, S2.2 die Konfigurationsdaten KD1, KD2 für die Gerätekomponenten 1, 2 erstellt, wobei die Konfigurationsdaten KD1, KD2 zum Beispiel den Scanbereich SB der Gerätkomponente 1 und die Bremsrampen BR der Gerätekomponente 2 entsprechend der Anzahl der Kisten und dem Gewicht der Beladung für das fahrerlose Transportfahrzeug AGV umfassen.

Die erstellten Konfigurationsdaten KD1, KD2 für die Gerätekomponenten 1, 2 werden durch das zweite Softwaretool S2.1, S2.2 in dem weiteren Datenverwaltungsbereich 5 abgespeichert und den Gerätekomponenten 1, 2 zur Verfügung gestellt.

Hierdurch kann erfindungsgemäß der Kunde sein Automatisierungssystem, insbesondere das fahrerlose Transportfahrzeug AGV mit den Gerätekomponenten 1, 2, ohne Kenntnisse bzgl. der herstellerspezifischen Terminologie für die Konfigurationsdaten konfigurieren. Bei einer Konfiguration mehrerer gleicher Automatisierungssysteme benötigt der Kunde vorteilhafterweise nur eine einzige Eingabe seiner kundenspezifischen terminologischen Anwenderdaten in die erfindungsgemäße Konfigurationsvorrichtung KV, so dass der Kunde bei der mehrfachen Konfiguration viel Zeit einsparen kann.

Gemäß einem bevorzugten Ausführungsbeispiel können die beschriebenen Userinterfaces des ersten und zweiten Softwaretools S1.1 - S1.3, S2.1 - S2.2 in einem einzigen Userinterface vereint sein, wobei die beschriebenen Funktionalitäten der beiden Softwaretools S1.1 - S1.3, S2.1 - S2.2 trotzdem voneinander getrennt bleiben.

Ferner ermöglicht die erfindungsgemäße Konfigurationsvorrichtung KV eine Offline-Konfiguration des Automatisierungssystems, so dass nach einer abgeschlossenen Konfiguration die Konfigurationsdaten KD1, KD2 auf die Rechnereinheit CPU des fahrerlosen Transportfahrzeugs AGV übertragen werden können.

Vorzugsweise erkennt das zweite Softwaretool S2.1, S2.2, wenn sich die Anwenderdaten AD1 - AD3 in dem verknüpften Datenverwaltungsbereich 3 des ersten Softwaretools S1.1 - S1.3 geändert haben, so dass das zweite Softwaretool S2.1, S2.2 die Konfigurationsdaten KD1, KD2 in dem zugehörigen weiteren Datenverwaltungsbereich 5 anpasst. Die Anpassung kann vorteilhafterweise wahlweise automatisch oder nach Bestätigung durch den Kunden erfolgen.

Gemäß einem weiteren bevorzugten Ausführungsbeispiel können neue Versionen des zweiten Softwaretools S2.1, S2.2, in der z. B. neue Berechnungseinheiten 4 implementiert sind, eine Verknüpfung zu den in dem Verwaltungsbereich 3 des ersten Softwaretools S1.1 - S1.3 gespeicherten Anwenderdaten AD1 - AD3 herstellen, so dass der Kunde keine Neueingabe seiner Anwenderdaten AD1 - AD3 durchführen muss.

Vorzugsweise können weitere zweite Softwaretools S2.i ergänzt werden, die zu bestehenden Anwenderdaten AD1 - AD3 zugeordnet werden. Wenn z. B. das Automatisierungssystem um ein weiteres Gerät erweitert wird.

### Bezugszeichenliste

- CPU: Rechnereinheit
- 1,2: Gerätekomponente
- 3,5: Datenverwaltungsbereich
- 4: Berechnungseinheit
- 6: Verknüpfung der Anwenderdaten mit der Abbildungsvorschrift
- AGV: Fahrerloses Transportfahrzeug
- AD1, AD2, AD3: Anwenderdaten
- AV1, AV2: Abbildungsvorschrift
- BR: Bremsrampe
- KD1, KD2: Konfigurationsdaten
- KV: Konfigurationsvorrichtung
- SB: Scanbereich
- S1.1 - S1.3: Erstes Softwaretool
- S2.1 - S2.2: Zweites Softwaretool

## Patentansprüche

1. Konfigurationsvorrichtung (KV) zum Konfigurieren eines Automatisierungssystems eines Kunden, das Gerätekomponenten (1, 2) eines oder mehrerer Herstellers/Hersteller umfasst, **gekennzeichnet durch**
mindestens ein erstes Softwaretool (S1.1, S1.2, S1.3), das zum Eingeben von Anwenderdaten (AD1, AD2, AD3) in kundenspezifischer Terminologie vorgesehen ist und die eingegebenen Anwenderdaten (AD1, AD2, AD3) in einem Datenverwaltungsbereich (3) abspeichert, wobei die kundenspezifische Terminologie ein erstes Datenformat umfasst, in dem der Kunde die Anwenderdaten (AD1, AD2, AD3) beschreibt, und die Anwenderdaten (AD1, AD2, AD3) Automatisierungssystem-Betriebsdaten umfassen,
ein zweites Softwaretool (S2.1, S2.2), das zum Aufnehmen der Anwenderdaten (AD1, AD2, AD3) vorgesehen ist und eine Berechnungseinheit (4) zum Ermitteln von Konfigurationsdaten (KD1, KD2) aus den Anwenderdaten (AD1, AD2, AD3) aufweist,
wobei das zweite Softwaretool (S2.1, S2.2) zumindest eine Abbildungsvorschrift (AV1, AV2) aufweist, die die in kundenspezifischer Terminologie gespeicherte Anwenderdaten (AD1, AD2, AD3) für die Berechnungseinheit (4) in herstellerspezifische Terminologie vorbereitet, wobei die herstellerspezifische Terminologie ein zweites Datenformat umfasst, in dem der/die Hersteller die Konfigurationsdaten (KD1, KD2) beschreibt/beschreiben, und die Konfigurationsdaten (KD1, KD2) Komponenten-Betriebsdaten der Gerätekomponenten (1, 2) umfassen,
und wobei die Abbildungsvorschrift (AV1, AV2) des zweiten Softwaretools (S2.1, S2.2) einen Übersetzungsalgorithmus aufweist, der die kundenspezifischen terminologischen Anwenderdaten (AD1, AD2, AD3) in herstellerspezifische terminologische Daten umwandelt und der Berechnungseinheit (4) zur Verfügung stellt, die die Konfigurationsdaten (KD1, KD2) erstellt, und
wobei eine Abspeicherung der Anwenderdaten (AD1, AD2, AD3) und eine Abspeicherung der Konfigurationsdaten (KD1, KD2) durch das zweite Softwaretool (S2.1, S2.2) getrennt von dem Datenverwaltungsbereich (3) des ersten Softwaretools (S1.1, S1.2, S1.3) durchführbar sind.

2. Konfigurationsvorrichtung nach Anspruch 1, **dadurch gekennzeichnet, dass** das erste und zweite Softwaretool (S1, S2) jeweils zumindest eine Eingabemaske umfasst, die Eingabemaske des ersten Softwaretools (S1.1, S1.2, S1.3) für die Terminologie des Kunden und die Eingabemaske des zweiten Softwaretools (S2.1, S2.2) für die Terminologie des Herstellers ausgebildet sind.

3. Konfigurationsvorrichtung nach Anspruch 1 oder 2, **dadurch gekennzeichnet, dass** die Anwenderdaten (AD1, AD2, AD3) Automatisierungssystem-Betriebsdaten, vorzugsweise Beladungsdaten, Bewegungsgeschwindigkeit, Bewegungsprofil oder dergleichen des Automatisierungssystems umfassen.

4. Konfigurationsvorrichtung nach einem der vorhergehenden Ansprüche, **dadurch gekennzeichnet, dass** die Konfigurationsdaten (KD1, KD2) Komponenten-Betriebsdaten, vorzugsweise Beschleunigungsrampen, Bremsrampen (BR), Scanbereich (SB), Reaktionszeiten oder dergleichen der Gerätekomponenten (1, 2), umfassen.

5. Konfigurationsvorrichtung nach einem der vorhergehenden Ansprüche, **dadurch gekennzeichnet, dass** die kundenspezifischen terminologischen Anwenderdaten (AD1, AD2, AD3) aus dem Datenverwaltungsbereich (3) des ersten Softwaretools (S1.1, S1.2, S1.3) mittels Drag & Drop mit der Abbildungsvorschrift (AV1, AV2) des zweiten Softwaretools (S2.1, S2.2) verknüpfbar sind.

6. Verfahren zum Konfigurieren eines Automatisierungssystems eines Kunden, das Gerätekomponenten (1, 2) eines oder mehrerer Herstellers/Hersteller umfasst, **gekennzeichnet durch** die Schritte:
Eingeben und Abspeichern von Anwenderdaten (AD1, AD2, AD3) in kundenspezifischer Terminologie in einem Datenverwaltungsbereich (3) mittels eines ersten Softwaretools (S1.1, S1.2, S1.3), wobei die kundenspezifische Terminologie ein erstes Datenformat umfasst, in dem der Kunde die Anwenderdaten (AD1, AD2, AD3) beschreibt, und die Anwenderdaten (AD1, AD2, AD3) Automatisierungssystem-Betriebsdaten umfassen,
Verknüpfen der in kundenspezifischer Terminologie abgespeicherten Anwenderdaten (AD1, AD2, AD3) mit zumindest einer Abbildungsvorschrift (AV1, AV2) eines zweiten Softwaretools (S2.1, S2.2),
Umwandeln der kundenspezifischen Terminologien der Anwenderdaten (AD1, AD2, AD3) durch die Abbildungsvorschrift (AV1, AV2) in herstellerspezifischen Terminologien, wobei die herstellerspezifische Terminologie ein zweites Datenformat umfasst, in dem der/die Hersteller die Konfigurationsdaten (KD1, KD2) beschreibt/beschreiben, und die Konfigurationsdaten (KD1, KD2) Komponenten-Betriebsdaten der Gerätekomponenten (1, 2) umfassen,
und wobei die Abbildungsvorschrift (AV1, AV2) des zweiten Softwaretools (S2.1, S2.2) einen Übersetzungsalgorithmus aufweist, der die kundenspezifischen terminologischen Anwenderdaten (AD1, AD2, AD3) in herstellerspezifische terminologische Daten umwandelt und der Berechnungseinheit (4) zur Verfügung stellt,
Erstellen aus den in herstellerspezifischer Terminologie umgewandelten Anwenderdaten (AD1, AD2, AD3) Konfigurationsdaten (KD1, KD2) mittels einer Berechnungseinheit (4), und
Bereitstellen der herstellerspezifischen terminologischen Konfigurationsdaten (KD1, KD2) der jeweiligen Gerätekomponenten (1, 2) des Automatisierungssystems in einem weiteren Datenverwaltungsbereich (5).

7. Verfahren nach Anspruch 6, **dadurch gekennzeichnet, dass** die Anwenderdaten (AD1, AD2, AD3) in kundenspezifischer Terminologie mittels eines ersten Softwaretools (S1.1, S1.2, S1.3) eingegeben werden.

8. Verfahren nach Anspruch 6 oder 7, **dadurch gekennzeichnet, dass** das Umwandeln der kundenspezifischen terminologischen Anwenderdaten (AD1, AD2, AD3) in herstellerspezifischer Terminologie und das Erstellen der herstellerspezifischen terminologischen Konfigurationsdaten (KD1, KD2) in einem zweiten Softwaretool (S2.1, S2.2) durchgeführt werden.

9. Verfahren nach einem der vorhergehenden Ansprüche 6 bis 8, **dadurch gekennzeichnet, dass** die kundenspezifischen terminologischen Anwenderdaten (AD1, AD2, AD3) durch Drag & Drop vom ersten Softwaretool (S1.1, S1.2, S1.3) mit dem zweiten Softwaretool (S2.1, S2.2) verknüpft werden.

## Claims

1. Configuration apparatus (KV) for configuring an automation system of a customer that comprises device components (1, 2) of one or more manufacturers, **characterized in that**
at least one first software tool (S1.1, S1.2, S1.3) is provided for inputting user data (AD1, AD2, AD3) in customer-specific terminology and that stores the input user data (AD1, AD2, AD3) in a data management sector, wherein the customer-specific terminology comprises a first data format in which the customer describes the user data (AD1, AD2, AD3) and the user data comprise automation system operation data,
a second software tool (S2.1, S2.2) is provided for receiving the user data (AD1, AD2, AD3) and that has a calculation unit (4) for determining configuration data (KD1, KD2) from the user data (AD1, AD2, AD3), wherein the second software tool (S2.1, S2.2) has at least one mapping algorithm (AV1, AV2) that prepares the user data (AD1, AD2, AD3) stored in customer-specific terminology for the calculation unit (4) into manufacturer-specific terminology; wherein the manufacturer-specific terminology comprises a second data format in which the manufacturer describes the configuration data (KD1, KD2) and the configuration data (KD1, KD2) comprise component operating data of the device components (1, 2)
and wherein the at least one mapping algorithm (AV1, AV2) of the second software tool (S2.1, S2.2) has a conversion algorithm that converts the customer-specific terminological user data (AD1, AD2, AD3) into manufacturer-specific terminological data and provides them to the calculation unit (4) which creates the configuration data (KD1, KD2),
and wherein a storage of the user data (AD1, AD2, AD3) and a storage of the configuration data (KD1, KD2) can be carried out by the second software tool (S2.1, S2.2) separately from the data management sector (3) of the first software tool (S1.1, S1.2, S1.3).

2. Configuration apparatus in accordance with claim 1, **characterized in that** the first and second software tool (S1, S2) each comprise at least one input mask; and wherein the input mask of the first software tool (S1.1, S1.2, S1.3) is configured for the terminology of the customer and the input mask of the second software tool (S2.1, S2.2) is configured for the terminology of the manufacturer.

3. Configuration apparatus in accordance with claim 1 or 2, **characterized in that** the user data (AD1, AD2, AD3) comprise automation system operating data, especially load data, movement speed, movement profile or the like of the automation system.

4. Configuration apparatus in accordance with any preceding claim, charactrized in that configuration data (KD1, KD2) comprise component operating data, especially acceleration ramps, braking ramps (BR), scan region (SB), reaction times or the like of the device components.

5. Configuration apparatus in accordance with any preceding claim, charactrized in that the customer-specific terminological user data (AD1, AD2, AD3) from the data management sector (3) of the first software tool (S1.1, S1.2, S1.3) can be linked to the at least one mapping algorithm (AV1, AV2) of the second software tool (S2.1, S2.2) by means of drag & drop.

6. Method of configuring an automation system of a customer that comprises device components (1, 2) of one or more manufacturers, the method **characterized by** the steps:
inputting and storing user data (AD1, AD2, AD3) in customer-specific terminology in a data management sector (3) by means of a first software tool (S1.1, S1.2, S1.3) wherein the customer-specific terminology comprises a first data format in which the customer describes the user data (AD1, AD2, AD3) and the user data comprise automation system operation data,
linking the user data (AD1, AD2, AD3) stored in customer-specific terminology to at least one mapping algorithm (AV1, AV2) of a second software tool (S2.1, S2.2);
converting the customer-specific terminologies of the user data (AD1, AD2, AD3) in manufacturer-specific terminologies by the at least one mapping algorithm (AV1, AV2) wherein the manufacturer-specific terminology comprises a second data format in which the manufacturer describes the configuration data (KD1, KD2) and the configuration data (KD1, KD2) comprise component operating data of the device components (1, 2) and wherein the at least one mapping algorithm (AV1, AV2) of the second software tool (S2.1, S2.2) has a conversion algorithm that converts the customer-specific terminological user data (AD1, AD2, AD3) into manufacturer-specific terminological data and provides them to the calculation unit (4);
preparing configuration data (KD1, KD2) from the user data (AD1, AD2, AD3) converted in manufacturer-specific terminology by means of a calculation unit (4); and
providing the manufacturer-specific terminological configuration data (KD1, KD2) of the respective device components (1, 2) of the automation system in a further data management sector (5).

7. The method in accordance with claim 6, **characterized in that** the user data (AD1, AD2, AD3) are input in customer-specific terminology by means of a first software tool (S1.1, S1.2, S1.3).

8. The method in accordance with claim 6 or 7, **characterized in that** the conversion of the customer-specific terminological user data (AD1, AD2, AD3) in manufacturer-specific terminology and the preparation of the manufacturer-specific terminological configuration data (KD1, KD2) are carried out in a second software tool (S2.1, S2.2).

9. The method in accordance with claim 6 or 7 or 8, **characterized in that** the customer-specific terminological user data (AD1, AD2, AD3) are linked to the second software tool (S2.1, S2.2) by means of drag & drop from the first software tool (S1.1, S1.2, S1.3).

## Revendications

1. Appareil de configuration (KV) pour configurer un système d'automatisation d'un client qui comprend des composants de dispositif (1, 2) d'un ou plusieurs fabricants, **caractérisé en ce que**
au moins un premier outil logiciel (S1.1, S1.2, S1.3) est prévu pour la saisie de données utilisateur (AD1, AD2, AD3) dans une terminologie spécifique au client et qui stocke les données utilisateur saisies (AD1, AD2, AD3) dans un secteur de gestion de données, la terminologie spécifique au client comprenant un premier format de données dans lequel le client décrit les données utilisateur (AD1, AD2, AD3) et les données utilisateur comprennent des données d'exploitation du système d'automatisation,
un deuxième outil logiciel (S2.1, S2.2) est prévu pour recevoir les données utilisateur (AD1, AD2, AD3) et qui présente une unité de calcul (4) pour déterminer les données de configuration (KD1, KD2) à partir des données utilisateur (AD1, AD2, AD3),
dans lequel le deuxième outil logiciel (S2.1, S2.2) présente au moins un algorithme de mappage (AV1, AV2) qui prépare les données utilisateur (AD1, AD2, AD3) stockées dans une terminologie spécifique au client pour l'unité de calcul (4) dans une terminologie spécifique au fabricant ; dans lequel la terminologie spécifique au fabricant comprend un deuxième format de données dans lequel le fabricant décrit les données de configuration (KD1, KD2) et les données de configuration (KD1, KD2) comprennent les données de fonctionnement des composants des composants de l'appareil (1, 2),
et dans lequel au moins un algorithme de mappage (AV1, AV2) du deuxième outil logiciel (S2.1, S2.2) présente un algorithme de conversion qui convertit les données terminologiques utilisateur spécifiques au client (AD1, AD2, AD3) en données terminologiques spécifiques au fabricant et les fournit à l'unité de calcul (4) qui crée les données de configuration (KD1, KD2),
et dans lequel une mémorisation des données utilisateur (AD1, AD2, AD3) et une mémorisation des données de configuration (KD1, KD2) peuvent être effectuées par le deuxième outil logiciel (S2.1, S2.2) séparément du secteur de gestion de données (3) du premier outil logiciel (S1.1, S1.2, S1.3).

2. Appareil de configuration selon la revendication 1, **caractérisé en ce que** le premier et le second outil logiciel (S1, S2) comprennent chacun au moins un masque d'entrée; et dans lequel le masque d'entrée du premier outil logiciel (S1.1, S1.2, S1.3) est configuré pour la terminologie du client et le masque d'entrée du second outil logiciel (S2.1, S2.2) est configuré pour la terminologie du fabricant.

3. Appareil de configuration selon la revendication 1 ou 2, **caractérisé en ce que** les données d'utilisateur (AD1, AD2, AD3) comprennent des données de fonctionnement du système d'automatisation, en particulier les données de charge, la vitesse de déplacement, le profil de déplacement ou similaire du système d'automatisation.

4. Appareil de configuration selon une des revendications précédentes, **caractérisé en ce que** les données de configuration (KD1, KD2) comprennent des données de fonctionnement des composants, en particulier les rampes d'accélération, les rampes de freinage (BR), la zone de balayage (SB), les temps de réaction ou similaires des composants de l'appareil.

5. Dispositif de configuration selon une des revendications précédentes, **caractérisé en ce que** les données terminologiques utilisateur spécifiques au client (AD1, AD2, AD3) du secteur de gestion de données (3) du premier outil logiciel (S1.1, S1.2, S1.3) peuvent être liées à au moins un algorithme de cartographie (AV1, AV2) du second outil logiciel (S2.1, S2.2) par glisser-déposer.

6. Procédé de configuration d'un système d'automatisation d'un client qui comprend des composants de dispositif (1, 2) d'un ou plusieurs fabricants, le procédé étant **caractérisé par** les étapes:
la saisie et le stockage de données utilisateur (AD1, AD2, AD3) dans une terminologie spécifique au client dans un secteur de gestion de données (3) au moyen d'un premier outil logiciel (S1.1, S1.2, S1.3) dans lequel la terminologie spécifique au client comprend un premier format de données dans lequel le client décrit les données utilisateur (AD1, AD2, AD3) et les données utilisateur comprennent des données de fonctionnement du système d'automatisation,
relier les données utilisateur (AD1, AD2, AD3) stockées dans une terminologie spécifique au client à au moins un algorithme de mappage (AV1, AV2) d'un deuxième outil logiciel (S2.1, S2.2);
conversion des terminologies spécifiques au client des données utilisateur (AD1, AD2, AD3) dans des terminologies spécifiques au fabricant par au moins un algorithme de mappage (AV1, AV2), la terminologie spécifique au fabricant comprenant un second format de données dans lequel le fabricant décrit les données de configuration (KD1, KD2) et les données de configuration (KD1, KD2) comprennent les données de fonctionnement des composants du dispositif (1, 2),
et dans lequel au moins un algorithme de mappage (AV1, AV2) du deuxième outil logiciel (S2.1, S2.2) présente un algorithme de conversion qui convertit les données terminologiques utilisateur spécifiques au client (AD1, AD2, AD3) en données terminologiques spécifiques au fabricant et les fournit à l'unité de calcul (4);
préparer les données de configuration (KD1, KD2) à partir des données utilisateur (AD1, AD2, AD3) converties dans la terminologie propre au fabricant au moyen d'une unité de calcul (4); et
la mise à disposition des données de configuration terminologique spécifiques au fabricant (KD1, KD2) des composants d'appareil respectifs (1, 2) du système d'automatisation dans un autre secteur de gestion des données (5).

7. Procédé selon la revendication 6, **caractérisé en ce que** les données utilisateur (AD1, AD2, AD3) sont saisies dans une terminologie spécifique au client au moyen d'un premier outil logiciel (S1.1, S1.2, S1.3).

8. Procédé selon la revendication 6 ou 7, **caractérisé en ce que** la conversion des données terminologiques utilisateur spécifiques au client (AD1, AD2, AD3) dans une terminologie spécifique au fabricant et la préparation des données de configuration terminologique spécifiques au fabricant (KD1, KD2) sont effectuées dans un deuxième outil logiciel (S2.1, S2.2).

9. Procédé selon la revendication 6, 7 ou 8, **caractérisé en ce que** les données terminologiques utilisateur spécifiques au client (AD1, AD2, AD3) sont reliées au deuxième outil logiciel (S2.1, S2.2) par glisser-déposer à partir du premier outil logiciel (S1.1, S1.2, S1.3).
